# EUROPEAN PATENT APPLICATION

(11) **EP 3 477 467 A1**
(43) Date of publication of application: **01.05.2019**
(21) Application number: 17198680.5
(22) Date of filing: 26.10.2017
(51) Int. Cl.: G06F 9/4401, G06F 8/38

(54) **METHOD OF OPERATING AN ELECTRONIC DEVICE, ELECTRONIC DEVICE AND COMPUTER PROGRAM**

(71) Applicant: Vestel Elektronik Sanayi ve Ticaret A.S., 45030 Manisa (TR)
(72) Inventor: YÜKSEL, Ulas, 45030 Manisa (TR)
(74) Representative: Martinez, Olivier Gildas

(57) **Abstract**

An electronic device receives (220) a command to operate in a stand-by mode. The electronic device processes (204) at least one boot item intended to be rendered by a rendering component when exiting the stand-by mode. The electronic device receives (221) a command to exit the stand-by mode.

## Description

### Technical Field

The present disclosure relates to a method of operating an electronic device, an electronic device and a computer program.

### Background

Most televisions implement a suspend-to-random access memory (STR) feature in stand-by mode. That is, when a television operates in stand-by mode, all components are powered off except a volatile memory (e.g. random access memory (RAM)). The volatile memory stores runtime variables and parameters so that when the television exits the stand-by mode the television may boot up quicker. The STR feature minimises the waiting time and improves the end user experience.

### Summary

According to a first aspect disclosed herein, there is provided a method of operating an electronic device, the method comprising:
in sequence:
   receiving a command to operate in a stand-by mode;
   processing at least one boot item intended to be rendered by a rendering component when exiting the stand-by mode; and
   receiving a command to exit the stand-by mode.

The processing the at least one boot item may be carried out in response to receiving the command to operate in the stand-by mode. This contrasts with methods wherein the at least one boot item is processed in response to receiving the command to exit the stand-by mode. It will be understood that the term "rendering" as used herein may refer to for example displaying an image and/or playing back sounds (and not for example processing image data in order to generate an image to be displayed or processing audio data in order to generate sounds to be played back).

The processing the at least one item may comprise storing the at least one boot item in a rendering buffer which feeds the rendering component prior to entering stand-by mode.

The rendering component may comprise a display and the at least one boot item may comprise an image.

The image may be a static image or a dynamic image (e.g. video).

The rendering component may comprise a loudspeaker; and the at least one boot item may comprise a sound.

The method may comprise:
turning off the rendering component in response to receiving the command to operate in a stand-by mode.

The method may comprise:
turning on the rendering component in response to receiving the command to exit the stand-by mode.

Processing the at least one boot item may comprise decoding the least one boot item.

The method may comprise:
processing the at least one boot item intended to be rendered on the rendering component when exiting the stand-by mode in response to determining that the least one boot item is allowed to be rendered by the rendering component when exiting the stand-by mode.

The method may comprise:
receiving a command to allow the least one boot item to be rendered by the rendering component when exiting the stand-by mode.

The method may comprise:
abstaining from processing the at least one boot item intended to be rendered on the rendering component when exiting the stand-by mode in response to determining that the least one boot item is not allowed to be rendered by the rendering component when exiting the stand-by mode.

The method may comprise:
receiving a command to disallow the least one boot item to be rendered by the rendering component when exiting the stand-by mode.

According to a second aspect disclosed herein, there is provided an electronic device comprising at least one processor and at least one memory including a computer program code, the at least one memory and the computer program code configured to, with the at least one processor, cause the electronic device at least to:
following receipt of a command to operate in a stand-by mode, process at least one boot item intended to be rendered by a rendering component when exiting the stand-by mode;
store the at least one boot item in a rendering buffer of the electronic device which feeds the rendering component; and then
enter stand-by mode.

In an example, the rendering component comprises a display and the at least one boot item comprises an image to be displayed on the display, the electronic device being arranged to retrieve the stored boot item image from the rendering buffer and to render the boot item image on the display on exiting stand-by mode.

In an example, the rendering component comprises a loudspeaker and the at least one boot item comprises a sound to be played out through the loudspeaker, the electronic device being arranged to retrieve the stored boot item sound from the rendering buffer and to play the boot item sound on the loudspeaker on exiting stand-by mode.

According to a third aspect disclosed herein, there is provided a computer program for an electronic device, comprising software code portions for performing a method as described above when said computer program is run on the electronic device.

There may be provided a non-transitory computer-readable storage medium storing a computer program as described above.

### Brief Description of the Drawings

To assist understanding of the present disclosure and to show how embodiments may be put into effect, reference is made by way of example to the accompanying drawings in which:
Figure 1 shows schematically a conventional system;
Figure 2 shows schematically a diagram of a method of operating the conventional system of Figure 1;
Figure 3 shows schematically an example of a system according to an embodiment disclosed herein; and
Figure 4 shows schematically a flow diagram of an example of a method of operating the system of Figure 3.

### Detailed Description

A television may implement a suspend-to-random access memory (STR) feature in stand-by mode. That is, when the television operates in stand-by mode, all components may be powered off except a volatile memory (e.g. random access memory (RAM)). The volatile memory may store runtime variables and parameters so that when the television exits the stand-by mode the television may boot up quicker. The STR feature minimises the waiting time and improves the end user experience.

A boot logo and/or a boot sound may typically be rendered on or by a display and/or by one or more loudspeakers when the television exits the stand-by-mode (that is, the boot logo is displayed on a display or the boot sound is played back through the loudspeaker(s)). The boot logo and/or the boot sound may typically be a trademark associated with a manufacturer. The boot logo and/or the boot sound preferably have a high resolution to maximise the end user perceived quality.

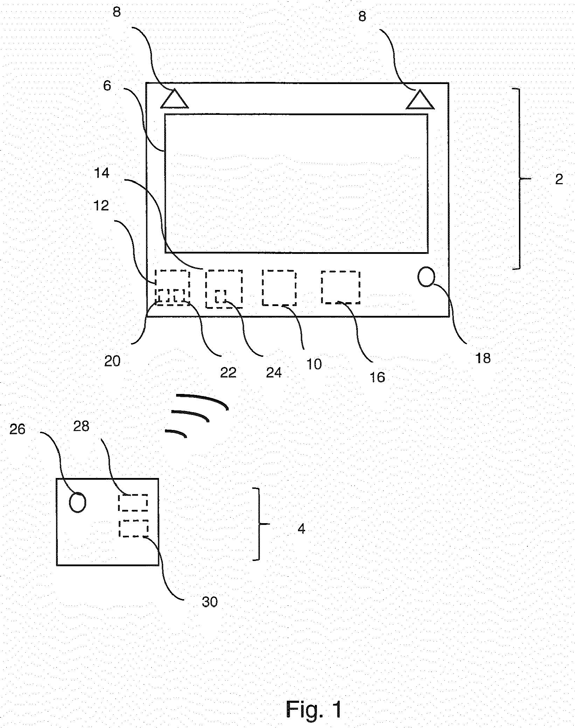

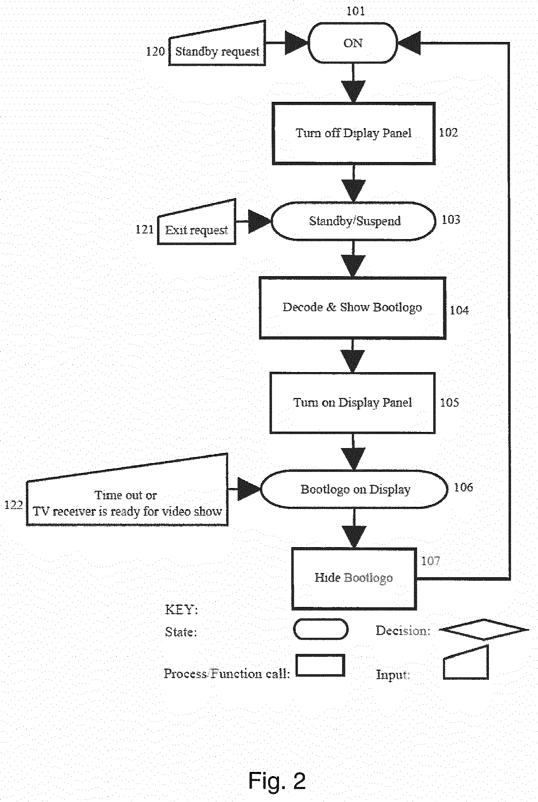

An issue with rendering the boot logo and/or boot sound when exiting the stand-by mode is that it may delay the completion of the boot up. As a result, it may increase the waiting time and alter the end user experience. This issue will be explained in further detail with reference to Figures 1 and 2.

Figure 1 illustrates a conventional system comprising a television 2 and a remote control 4.

The television 2 comprises a display 6, one or more loudspeakers 8, a processor 10, a volatile memory 12, a non-volatile memory 14, an infrared or other remote control signal receiver 16 and a plurality of buttons 18.

The processor 10 runs a computer program stored in non-volatile memory 14 to perform the method of Figure 2.

The volatile memory 12 may be for example a random access memory (RAM). The volatile memory 12 includes an STR buffer 20 for storing runtime variables and parameters. The volatile memory 12 further includes a rendering buffer 22 for storing content to be rendered by the display 6 and/or the loudspeaker 8. The content may include video and/or sound. The content may be provided by various content-providing devices (not shown) including but not limited to a set-top box, a video games console, a digital video disc (DVD) or Blu-Ray player, a mobile phone, a tablet computer, a desktop computer or a laptop computer.

The non-volatile memory 14 may be a rewritable or non-rewritable read only memory (ROM). The non-volatile memory 14 includes a boot item buffer 24 for storing a boot logo and/or a boot sound. The boot logo and/or the boot sound are for example stored in the non-volatile memory 14 at the time of manufacturing.

The plurality of buttons 18 includes an ON/ OFF button to issue a command to operate the television 2 in ON mode or OFF mode (discussed further below).

The remote control 4 comprises a processor 20, a plurality of buttons 26, a non-volatile memory such as a non-rewritable read only memory 24 and an infrared or other remote control signal transmitter 30. The plurality of buttons 26 include a STAND-BY button to issue a command to operate the television 2 in STAND-BY mode or to exit a STAND-BY mode and operate the television 2 in ON mode.

In ON mode, most or all components of the television 2 may be powered on. The rendering buffer 22 within the volatile memory 12 stores and updates content from the content-providing device and this content may be rendered by the display 6 and/or the loudspeakers 8.

In OFF mode, most (e.g. all) components of the television 2 may be powered off. The rendering buffer 22 within the volatile memory 12 stores no content from the content-providing device. No content is rendered by the display 6 and/or the loudspeaker 8.

In STAND-BY mode, most (e.g. all) components of the television 2 may be powered off except the volatile memory 12. The rendering buffer 22 within the volatile memory 12 may store content from the content-providing device but this content is not updated and is not rendered by the display and/or the loudspeaker. The STR buffer 20 within the random memory access memory 12 stores the runtime variable and parameters.

Figure 2 illustrates a flow diagram of a method of operating the television 2 of Figure 1.

In step 101, the processor 10 operates the television 2 in ON mode. The rendering buffer 22 within the volatile memory 12 stores and updates content from the content-providing device and this content may be rendered by the display 6 and/or the loudspeakers 8.

In step 120, the processor 10 receives a command to operate the television 2 in STAND-BY mode. For example, an end user presses the STAND-BY button on the remote control 4.

In step 102, the processor 10 powers off the display 6 and/or the loudspeakers 8.

In step 103, the processor 10 stores the runtime variable and parameters in the STR buffer 20 within the random memory access memory 12 and then operates the television 2 in STAND-BY mode. The rendering buffer 22 within the volatile memory 12 stores content from the content-providing device but this content is not updated and is not rendered by the display and/or the loudspeaker.

In step 121, the processor 10 receives a command to exit STAND-BY mode and to operate the television 2 in ON mode again. For example, the end user presses again the STAND-BY button or presses the ON button on the remote control 4.

In step 104, the processor 10 fetches the boot logo and/or the boot sound from the boot item buffer 24 within the non-volatile memory 14. The processor 10 has to decode the boot logo and/or the boot sound and then stores the decoded boot logo and/or the decoded boot sound in the rendering buffer 22.

In step 105, the processor 10 powers on the display 6 and/or the loudspeakers 8. The decoded boot logo and/or the decoded boot sound stored in the rendering buffer 22 are rendered by the display 6 and/or the loudspeakers 8 (i.e. displayed on the display 6 and/or played back through the loudspeakers 8 respectively).

In step 106, the processor 10 operates starts a timer. The timer may be a count-up timer or a countdown timer.

In step 122, the processor 10 receives an indication that the timer has reached a predetermined time value (e.g. 1.5 sec). Alternatively, the processor 10 may be ready to operate the television 2 in ON mode (for example, in response to noting that boot up is complete).

In step 107, the processor 10 operates the display 6 and/or the loudspeakers 8 to stop rendering the decoded boot logo and/or the decoded boot sound. The boot logo and/or the boot sound are hidden. Then, the method loops back to step 101.

An issue with the above method of operating the television 2 is that the operations of fetching, decoding and storing (step 104) are time consuming, especially when the boot logo and/or the boot sound have high resolutions. It has been appreciated that the decoding of the boot logo and/or the boot sound (i.e. processing the boot logo data and/or the boot sound data to produce a boot logo and/or boot sound that can be displayed or played back respectively) is particularly time-consuming). These operations therefore delay the rendering of the boot logo and/or the boot sound when the processor 10 receives the command to exit STAND-BY mode (step 121). As a result, these operations delay the completion of the boot-up, increase the waiting time and alter the end user experience.

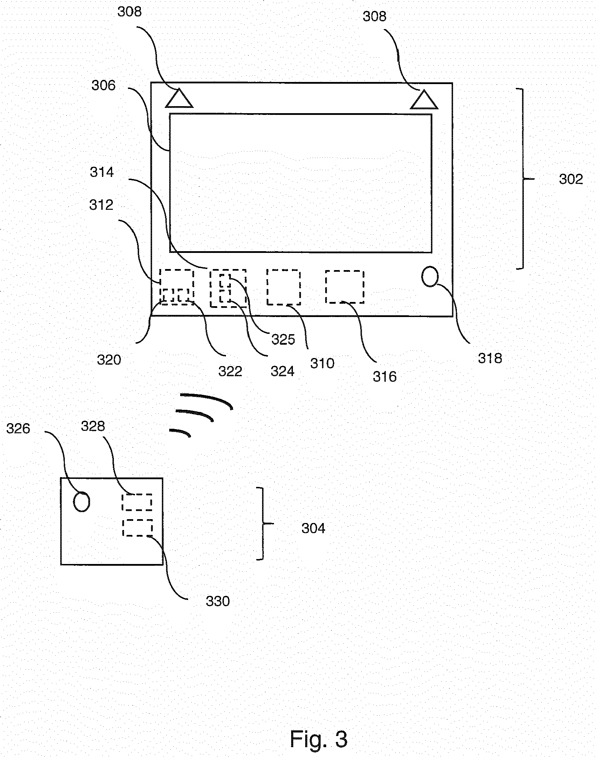

Figure 3 illustrates a television 302 as an example of an electronic device according to an aspect of the present disclosure and a remote control 304.

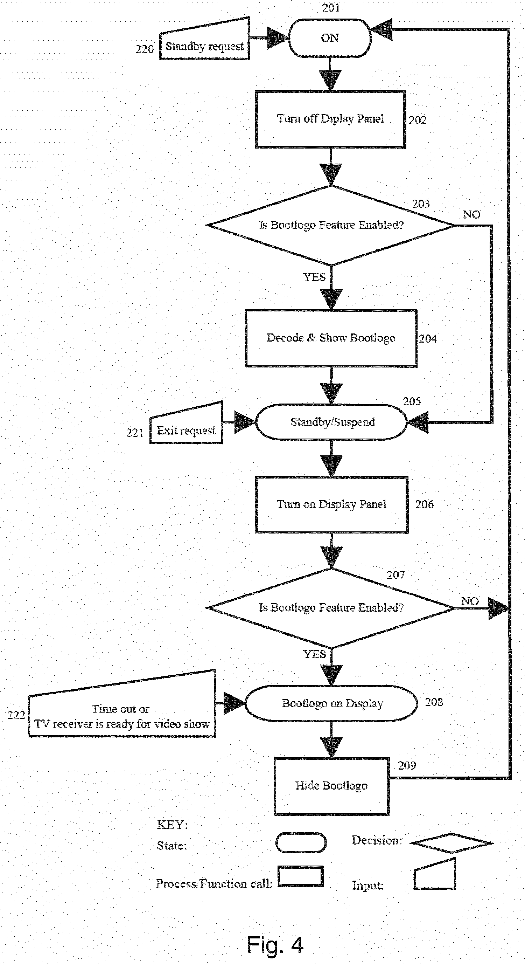

The television 302 comprises a display 306, one or more loudspeakers 308, a processor 310, a volatile memory 312, a non-volatile memory 314, an infrared or other remote control signal receiver 316 and a plurality of buttons 318. The processor 310 runs a computer program stored in non-volatile memory 314 to perform the method of Figure 4 described further below.

The volatile memory 312 may be for example a random access memory (RAM). The volatile memory 312 may include an STR buffer 20 for storing runtime variables and parameters. The volatile memory 312 may further include a rendering buffer 22 for storing content to be rendered by the display 6 and/or the loudspeaker 8 (i.e. content that can be displayed or played back respectively). The content may include video and/or sound. The content may be provided by various content-providing devices (not shown) including but not limited to a set-top box, a video games console, a digital video disc (DVD) or Blu-Ray player, a mobile phone, a tablet computer, a desktop computer or a laptop computer.

The non-volatile memory 314 may be a rewritable or non-rewritable read only memory (ROM). The non-volatile memory 314 may include a boot item buffer 324 for storing a boot logo and/or a boot sound. The boot logo and/or the boot sound are for example stored in the non-volatile memory 314 at the time of manufacturing. The non-volatile memory 314 may further include an end user preference buffer 325 for storing an indication of whether the end user wants a boot logo and/or a boot sound to be rendered when exiting the STAND-BY mode. The indication may for example be provided by the end user using the remote control 304 at the time of setting up the television 302.

The plurality of buttons 318 may include an ON/ OFF button to issue a command to operate the television 302 in ON mode or OFF mode (discussed further below).

The remote control 4 comprises a processor 320, a plurality of buttons 326, a non-volatile memory such as a non-rewritable read only memory 324 and an infrared or other remote control signal transmitter 330. The plurality of buttons 326 may include a STAND-BY button to issue a command to operate the television 302 in STAND-BY mode or to exit a STAND-BY mode and operate the television 302 in ON mode.

In ON mode, most or all components of the television 302 may be powered on. The rendering buffer 322 within the volatile memory 312 may store and update content from the content-providing device and this content may be rendered by the display 306 and/or the loudspeakers 308.

In OFF mode, most (e.g. all) components of the television 302 may be powered off. The rendering buffer 322 within the volatile memory 312 may not store any content from the content-providing device. No content is rendered by the display 306 and/or the loudspeaker 308.

In STAND-BY mode, most (e.g. all) components of the television 302 may be powered off except the volatile memory 312. The rendering buffer 322 within the volatile memory 312 may store content from the content-providing device but this content may not be updated or rendered by the display and/or the loudspeaker. Also, the STR buffer 320 within the random memory access memory 312 may store the runtime variable and parameters.

Figure 4 illustrates a diagram of an example of a method of operating the television 302 of Figure 3 according to an aspect of the present disclosure.

In step 201, the processor 310 operates the television 302 in ON mode. As a result, the rendering buffer 322 within the volatile memory 312 stores and updates content from the content-providing device and this content may be rendered by the display 306 and/or the loudspeakers 308.

In step 220, the processor 310 receives a command to operate the television 2 in STAND-BY mode. For example, an end user presses the STAND-BY button on the remote control 304.

In step 202, the processor 310 may power off the display 306 and/or the loudspeakers 308.

In step 203, the processor reads the end user preference buffer 325 within the non-volatile memory 314 and determines whether the boot logo and/or the boot sound are to be rendered when exiting the STAND-BY mode. If the end user indicated that a boot logo and/or a boot sound are to be rendered when exiting the STAND-BY mode, the method goes to step 204. If the end user indicated that the boot logo and/or the boot sound are not to be rendered when exiting the STAND-BY mode, the method skips step 204 and goes to step 205.

In step 204, the processor 310 fetches the boot logo and/or the boot sound from the boot item buffer 324 within the non-volatile memory 314. The processor 310 may further decode the boot logo and/or the boot sound as necessary and stores the decoded boot logo and/or the decoded boot sound in the rendering buffer 322.

In step 205, the processor 310 stores the runtime variable and parameters in the STR buffer 320 within the random memory access memory 312 and then causes the television 302 to go to STAND-BY mode. The rendering buffer 322 within the volatile memory 312 stores the decoded content from the content-providing device but this content may not be updated and is not rendered by the display and/or the loudspeaker as the television 302 is in STAND-BY mode. It is noted here that the boot logo and/or the boot sound (which have already been decoded as necessary so as to be ready to be rendered later) is/are in the rendering buffer 322 prior to the television 302 entering STAND-BY mode.

In step 221, the processor 310 receives a command to exit STAND-BY mode and to operate the television 302 back in ON mode. For example, the end user presses again the STAND-BY button or an ON button on the remote control 304.

In step 206, the processor 310 powers on the display 306 and/or the loudspeakers 308 and any associated video and audio processing circuitry.

In step 207, if the end user indicated that a boot logo and/or a boot sound are to be rendered when exiting the STAND-BY mode, the method goes to step 208; otherwise the method loops back to step 201.

In step 208, the display 6 and/or the loudspeakers 308 render the already-decoded boot logo and/or the already-decoded boot sound which had previously been stored in the rendering buffer 322. It is noted that the rendering of the boot logo and/or the decoded boot sound can take place practically immediately upon powering on the display 306 and/or the loudspeakers 308 and that no decoding or other processing of video or audio data is required as that already took place prior to the television 302 entering STAND-BY mode. The processor 310 may start a timer. The timer may be a count up timer or a countdown timer.

In step 222, the processor 310 may receive an indication that the timer has reached a predetermined time value (e.g. 1.5 sec). Alternatively, the processor 310 may be ready to operate the television 302 in ON mode (for example, in response to noting that boot up is complete).

In step 209, the processor 310 may operate the display 306 and/or the loudspeakers 8 to stop rendering the decoded boot logo and/or the decoded boot sound (i.e. the boot logo and/or the boot sound are hidden) and the method loops back to step 201.

An advantage of the method of Figure 4 over the method of Figure 2 is that the operations of fetching, decoding and storing the boot logo and/or the boot sound (step 204) are performed in anticipation of receiving the command to exit the STAND-BY mode (step 221) rather than in response to receiving the command to exit the STAND-BY mode (step 221). As a result, these operations, which are time-consuming, no longer delay the rendering of the boot logo and/or the boot sound after receiving the command to exit STAND-BY mode (step 221). In other words, these operations no longer delay the completion of the boot-up and no longer increase the waiting time. The end user experience is therefore improved, particularly at the time that the television 302 is returned to ON mode from STAND-BY mode.

Moreover, the end user is provided with the flexibility to disallow the operations of fetching, decoding and storing the boot logo and/or the boot sound (step 204) before receiving the command to exit STAND-BY mode (step 221) and to disallow the operation of rendering the boot logo and/or the boot sound (step 208) after receiving the command to exit STAND-BY mode (step 221). Accordingly, the completion of the boot-up may be accelerated and the end user experience may further be improved.

It will be understood that although the method of Figure 4 operates a television, it may operate any electronic device rendering any boot item when exiting a STAND-BY mode. Such electronic device may include but is not limited to a desktop computer, a laptop computer, a mobile phone, a video game console, a table or the like. A boot item may also include but is not limited to a boot logo and/or a bout sound (e.g. trademark of a manufacturer or other provider), a boot picture, a boot video (e.g. movie), a boot haptic signal (e.g. vibration, braille message), a boot light signal (e.g. light emitting diode blinking) or the like.

In other aspects, there may also be provided a method of operating a television comprising:
abstaining from processing at least one boot item intended to be rendered by a rendering component when exiting a stand-by mode in response to determining that the least one boot item is not allowed to be rendered by the rendering component when exiting the stand-by mode.

The method may comprise:
receiving a command to disallow the least one boot item to be rendered by the rendering component when exiting the stand-by mode.

The method may comprise:
processing the at least one boot item intended to be rendered by the rendering component when exiting the stand-by mode in response to determining that the least one boot item is allowed to be rendered by the rendering component when exiting the stand-by mode.

The method may comprise:
receiving a command to allow the least one boot item to be rendered by the rendering component when exiting the stand-by mode.

There may also be provided a television comprising at least one processor and at least one memory including a computer program code, the at least one memory and the computer program code configured to, with the at least one processor, cause the television to perform the method according to the second aspect.

There may also be provided a computer program for a television, comprising software code portions for performing the method according to the second aspect when said computer program is run on the television.

There may be also provided a non-transitory computer-readable storage medium storing a computer program as described above.

It will also be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memories for storing data. This may be provided by a single component or by plural components.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-mode drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating an electronic device, the method comprising the electronic device in sequence:
receiving a command to operate in a stand-by mode;
processing at least one boot item intended to be rendered by a rendering component when exiting the stand-by mode; and
receiving a command to exit the stand-by mode.

2. A method of claim 1, wherein processing the at least one item comprises storing the at least one boot item in a rendering buffer which feeds the rendering component prior to entering stand-by mode.

3. A method of claim 1 or claim 2, wherein the rendering component comprises a display and the at least one boot item comprises an image to be displayed on the display.

4. A method of any of claims 1 to 3, wherein the rendering component comprises a loudspeaker and the at least one boot item comprises a sound to be played out through the loudspeaker.

5. A method of any of claims 1 to 4, comprising:
turning off the rendering component in response to receiving the command to operate in a stand-by mode.

6. A method of claim 5, comprising:
turning on the rendering component in response to receiving the command to exit the stand-by mode.

7. A method of any of claims 1 to 6, wherein processing the at least one boot item comprises decoding the least one boot item.

8. A method of any of claims 1 to 7, comprising:
processing the at least one boot item intended to be rendered on the rendering component when exiting the stand-by mode in response to determining that the at least one boot item is allowed to be rendered by the rendering component when exiting the stand-by mode.

9. A method of claim 8, comprising:
receiving a command to allow the least one boot item to be rendered by the rendering component when exiting the stand-by mode.

10. A method of any of claims 1 to 9, comprising:
abstaining from processing the at least one boot item intended to be rendered on the rendering component when exiting the stand-by mode in response to determining that the least one boot item is not allowed to be rendered by the rendering component when exiting the stand-by mode.

11. A method of claim 10, comprising:
receiving a command to disallow the least one boot item to be rendered by the rendering component when exiting the stand-by mode.

12. An electronic device comprising at least one processor and at least one memory including a computer program code, the at least one memory and the computer program code configured to, with the at least one processor, cause the electronic device at least to:
following receipt of a command to operate in a stand-by mode, process at least one boot item intended to be rendered by a rendering component when exiting the stand-by mode;
store the at least one boot item in a rendering buffer of the electronic device which feeds the rendering component; and then
enter stand-by mode.

13. An electronic device of claim 12, wherein the rendering component comprises a display and the at least one boot item comprises an image to be displayed on the display, the electronic device being arranged to retrieve the stored boot item image from the rendering buffer and to render the boot item image on the display on exiting stand-by mode.

14. An electronic device of claim 12 or claim 13, wherein the rendering component comprises a loudspeaker and the at least one boot item comprises a sound to be played out through the loudspeaker, the electronic device being arranged to retrieve the stored boot item sound from the rendering buffer and to play the boot item sound on the loudspeaker on exiting stand-by mode.

15. A computer program for an electronic device, comprising software code portions for performing the method any of claims 1 to 11 when said computer program is run on the electronic device.
